Europäisches Patentamt

European Patent Office

Office européen des brevets

(11) Publication number: **0 080 752**
**A1**

(12) # EUROPEAN PATENT APPLICATION

(21) Application number: **82201406.4**

(22) Date of filing: **10.11.82**

(51) Int. Cl.³: **F 16 P 3/04**

(30) Priority: **30.11.81 NL 8105398**

(43) Date of publication of application:
**08.06.83 Bulletin 83/23**

(84) Designated Contracting States:
**AT BE CH DE FR GB IT LI NL SE**

(71) Applicant: **Administratie- en Automatiseringscentrum Vulcaan B.V.**
**Prof. E.M. Meijerslaan 1**
**NL-1183 AV Amstelveen(NL)**

(72) Inventor: **Van Ginkel, Mannes**
**Amersfoortsestraat 79**
**NL-3772 CH Barneveld(NL)**

(74) Representative: **De Wit, Gerard Frederik, Ir. et al,**
**Octrooi- en Merkenbureau De Wit B.V. Breitnerlaan 146**
**NL-2596 HG Den Haag(NL)**

(54) Safety device.

(57) A safety device is shown having a shield (23) shielding a danger region of the machine, said shield activating the machine when it is put in its closed position, whereas the machine is provided with means for opening (27, 26 and 25) the shield, when the machine is at such a point of its working cycle that no danger exists in the danger region. Preferably a yielding one-way clutch (29) is present between a moving part of the machine and the device for restoring the shield in its open position.

FIG.1

EP 0 080 752 A1

Safety device.

The invention relates to a safety device for a machine, for instance a packing machine, having a manipulation region, for instance a lay-in region for objects to be packed, a shielding member movable from a first position in which it lets the region free to a second position in which it shields said region, which machine is provided with movable members in the said region and switching means preventing the activation of said movable members when the shielding member is in its first position, said machine being devised for letting the said movable members carry out a predetermined work cycle after their activation.

Such a safety device is known from the U.S. Patent Specification 2,201,244. With this known device a switch which is controlled by the shielding member prevents energizing a feed relay for driving movable members in a predetermined direction. Apart from the necessity to have two feed relays energizing the device in two directions it is necessary to return the shielding member manually into its said first position.

The invention aims to eliminate the drawbacks resulting from the above indicated features namely a system of two relays of which only one can be energized at a time and separate driving means for driving the device in opposite directions, as well as the effort and time necessary for returning the shielding member to its first position.

According the invention the above aims are realized by providing, that a reset mechanism is present, which mechanism is adapted to reset the shielding member into the said first position, said reset mechanism being coupled to the position of said movable members to reset said shielding member when said movable members are in a predetermined position of their work cycle.

In the device known from the said U.S. Patent Specification at least one movable member carries out an alternating movement. In that instance according to a further elaboration of the invention a simple and reliable embodiment of the invention provides that the reset mechanism contains a one-way connection between the shielding member and the movable member, allowing said movable member to move in a direction without moving said shielding member but driving said shielding member into its said first position, when said movable member moves in the opposite direction.

In this respect is pointed to the Swiss Patent Specification 410.533. This shows a safety device in which a shielding member is elastically driven, whereas the device is automatically put into operation when the shielding member is closed. A timing device controls the operation of the shielding member. Apart from a rather complicated control and driving arrangement, this known device is not actuated by its operator. The operator has to follow the adjusted machine speed and only if his hand physically stops the shielding member the time cycle is interrupted. The invention provides a machine that is only operated by its operator, so that the operator can, without any time loss make the machine run when he is ready with his preparing work. Further the invention is free from the very disagreeable feature that the operator in practice has to try to retract his hand just before the shielding member hits it, though this latter event, because of the elastical drive connection of the shielding member, cannot really injure him.

According to a further improvement of the invention it is provided that said one-way connection contains a friction clutch. Such a friction coupling always allows manual actuation of the shielding member and restoration of the right position of the movable members with respect to the shielding member, if this relative position has been lost by manually activating the shielding member. By combining a one-way connection, such as a free wheel clutch, with a friction coupling it is possible to prevent the necessity to overcome the friction force with manual operating the machine and nevertheless to be able to freely manipulate the shielding member and after that to restore the normal relative position of the shielding member and the movable members.

In many known machines safety devices contain control switches located in such a way that activation of these switches is only possible by the operator by using those body parts that could be injured by the machine. In most instances two control switches, each of them located outside the danger region of the machine have to be activated by both hands of the operator. This involves movement of both hands, whereas in case the operator finds a way out to come around activating of one of the switches, for instance by having it permanently closed, still no complete safety is attained. A further elaboration of the invention allows however, to maintain the complete safety of the invention, to eliminate the necessity to have the shielding member manually activated and nevertheless to have to operate only one control means. This further elaboration of the invention consists in that a driving means for the said shielding member is present, said driving means being capable to exert only forces below a predetermined limit.

It is remarked that with this construction only in case the operator makes the mistake to activate the driving means with his one hand when his other hand is in the danger region, he can come in touch with the limited force of the driving means, whereas with the device according to the Swiss Patent Specification 410.533 this may happen each and every time the machine starts an operating cycle.

One of the major fields of application of the invention relates to poultry dressing and packing devices. In this respect is pointed to the Netherland's Patent Application 7406376, in which a poultry dressing and packing device is shown, in which the fowl under treatment is used as control member for movable members of the machine. This is not used for improving the safety of the operator. This safety is here obtained by a filling and feeding device preceding the dressing apparatur proper. This solution is far more complicated than that of the invention.

Finally it is remarked that safety devices in the form of
overload clutches are generally known, for instance from the
French patent Specification 2.429.92?, but that the friction
coupling mentioned earlier in a preferred embodiment of the
invention does not serve the purpose of overload limiter.
With the invention a maximum of safety is combined with a
minimum of effort of the operator, whereas the operator never
has to wait for the lapse of any time introduced by a timing
device or for access to the place where he has to work later
than the moment at which the movable members present at that
place cannot do any harm.

The invention in the following is elucidated on hand of a
poultry dressing and packing device, schematically shown in
the drawing in which:-

Figure 1 schematically shows a device according the invention
in a first position;

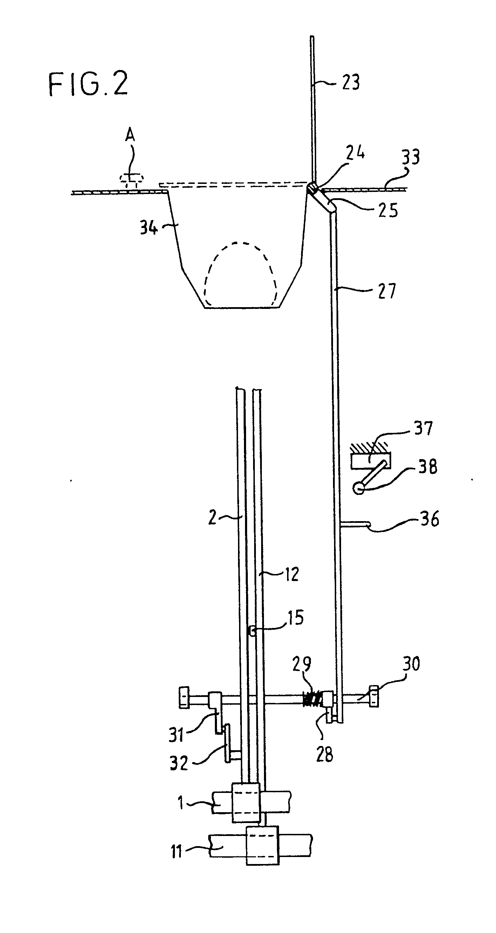

Figure 2 is a section of the line II-II of figure 1; and

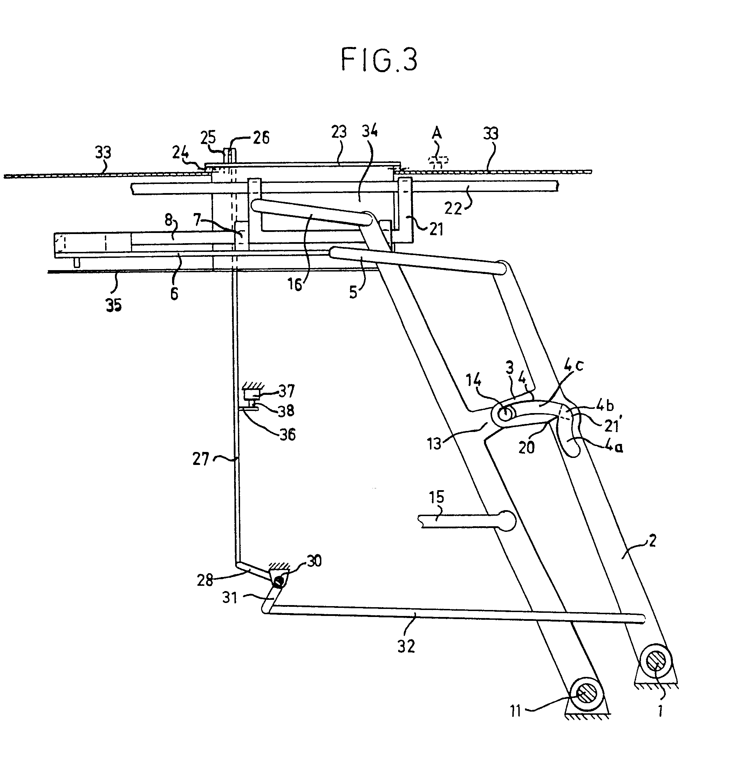

Figure 3 shows the device in a further position.

In the drawing the invention is shown applied to the packing
device shown in the European patent application 82200742.3
In the following shortly the working of this device is
described.

With 1 a pivot has been indicated about which an arm 2 can
rotate, which contains a member 3 having a control slit 4
and at its upper end is connected to a link 5. This link 5
is connected to a pushing member 6. This member is by means
of suspending brackets 7 suspended to a glide rod 8, which
itself is supported by non shown means and is displaceable
in its longitudinal direction. At the end of the pushing
member, which is provided with a horizontal plane at its
upper side, a central baffle 9 is present and at the lower
side a transverse baffle 10.

Obliquely below the pivot 1 a pivot 11 is located, about
which an arm 12 can sway, which by means of a transverse
member 13 supports a control member 14 that fits in the control slit 4 and is driven by a driving member 15, which is horizontally movable to and fro. At its upper side the arm 12 is connected to a link 16 which by means of a support arm 17 is connected to the glide rod 8. The glide rod 8 at its forward end supports a pushing member 18 which at both sides of the baffle 9 is provided with two recesses for receiving the ends of the legs of a (non shown) fowl. Rod 8 is by means of arms 17 and 21 slidably mounted to a bar 22. The working of the device sketched in the above mainly is the following:

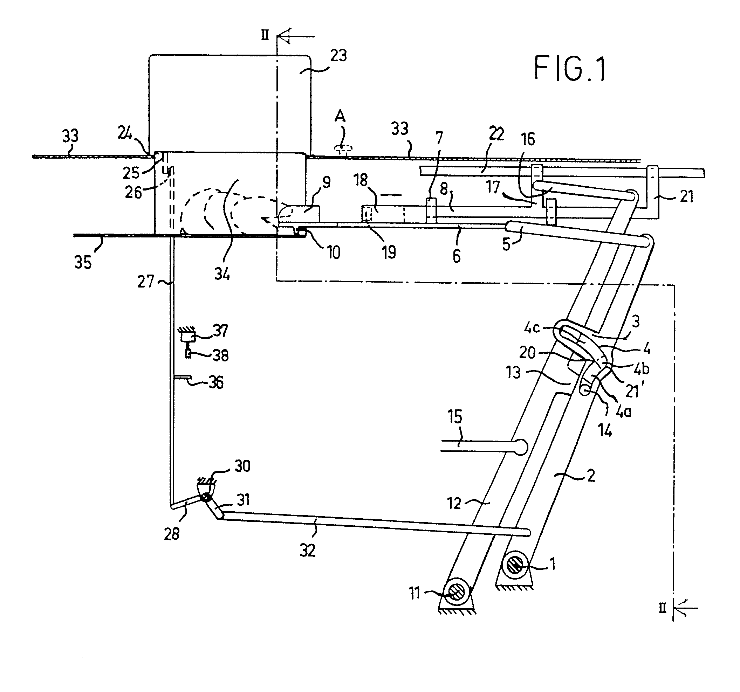

Starting from the position of fig. 1 the driving member 15 is moved toward the left, by reason of which the arm 12 sways counter clockwise and the link 16 moves the pushing member 18 towards the left.

Because the control member 14 is located in the first portion 4a of the control slit 4 the arm 12 is taken along therewith. This happens until at the bend 4b in the slit 4, whereas in the portion 4c of the slit the member 12 can let move the control member 14 without having the arm 2 taken along. The inner side of the part 20 of the transitive portion 4b of the slit has a small radius of curvature and the other side has a circle arc 21' wherewith the radius of this circle arc equals about the diameter of the member 14.

As more extensively has been indicated in the above mentioned European patent application with this construction is attained that with moving toward the left of the driving member firstly the arms 12 and 2 both move towards the left and following to this the arm 12 sways further counter clockwise, wherewith the member 2 almost remains at a stand still. When moving backward the inverse happens and firstly only member 12 moves backward, until the portion 4c of the slit 4 has been passed, after which the arm 2 sways back with the arm 12.

According the invention a shielding member in the form of a cover 23 is mounted pivotably about hinges 24, which member via a coupling arm 25 and a coupling pin 26 is connected to an activation rod 27, which works on the end of an arm 28 which via a friction clutch 29 can be coupled to a shaft 30. Fixedly with this shaft an arm 31 is connected which via a pivot connection is coupled to an arm 32, which is connected to the sway arm 2.

The shielding member 23 can be placed above an opening in a cover plate 33 wherewith a downwardly depending trough 34 and a support 35 for a fowl are present.

The member 27 is further connected to an abutment 36 which can cooperate with the operating member 38 of the activation switch 37.

The working of the described device is the following:

When the shielding member 23 is swayed down about the hinges 24, the arm 28 lifts the member 27 and the switch 37 is operated, because the abutment 36 cooperates with the operating member 38 of this switch. Thereby the driving member 15 is moved toward the left by reason of which firstly the arms 12 and 2 both sway toward the left; following to this the arm remains at a stand still and the arm 12 sways further toward the left; and following to this the arm 12 sways backward after which both arms sway back again.

With the latter movement the shaft 30 is rotated by means of the coupling rods 32 and 31 and thereby the shielding member 23 is opened again via the friction clutch 29 and the members 27,26 and 25. Herewith, however, no danger exists for a person who possibly wants to lay in a new fowl immediately after the shielding member 23 is sufficiently opened.

With the state of the art, also without shielding member 23, an activation switch was present at for instance the location A. It is now possible to mount an activation switch at the same location, which, however, does not operate the driving mechanism for member 15, but a very light driving mechanism for the shielding member 23, which member immediately remains at a stand still when it meets an anormal resistance. In that case the complete safety of the invention can be obtained without the activity to pivot the arm 28 about the shaft 30 against the friction coupling 29, which activity in the long run may be fatiguing.

In the shown embodiment the one and the another is organized such, that only with the last portion of the backward movement of the driving member 15 the opening of the shielding member is started. It will be clear that also with other driving mechanisms this goal can be obtained with simple means.

Finally it is remarked that the essence of the clutch 29 is to have the possibility firstly to pivot arm 28 clockwise without moving arm 31, then to pivot arm 31 clockwise without moving arm 28, then to have arms 28 and 31 connected with each other and having them moving together when arm 31 is pivoted counter clockwise. This means that for obtaining the results of the invention it is only necessary that arms 28 and 31 are coupled to each other with the backward movement of arm 31. Consequently the clutch 29 needs only to yield in case arm 28 is pivoted or arm 31 is pivoted clockwise. These results can be obtained without the need to overcome the friction force of the clutch by using a one-way or free wheel clutch. This improves the easiness of operating the machine. In order to prevent damage in case for some reason or the other arm 2 moves backward when rod 27 is in its lower position and shielding member 23 opened, for instance after manually opening shielding member 23, an additional yielding feature could be desired in case a free wheel clutch is used. In this instance an additional friction clutch could be used, which however, only is effective in case of exceptional situations.

The references indicated in the appending claims only serve the purpose of elucidation. In no way they are intended or can be interpreted as a limitation of the said claims.

Claims:

1. Safety device for a machine, for instance a packing machine, having a manipulation region, for instance a lay-in region for objects to be packed, a shielding member movable from a first position in which it lets the region free to a second position in which it shields said region, which machine is provided with movable members in the said region and switching means preventing the activation of said movable members when the shielding member is in its first position, said machine being devised for letting the said movable members carry out a predetermined work cycle after their activation, characterized in that a reset mechanism (32, 31, 30,29,28,27,26,15) is present, which mechanism is adapted to reset the shielding member (23) into the said first position, said reset mechanism being coupled to the position of said movable members to reset said shielding member when said movable members are in a predetermined position of their work cycle.

2. Safety device according to claim 1, in which at least one movable member carries out an alternating movement, characterized in that the reset mechanism contains a one-way connection (29) between the shielding member and the movable member, allowing said movable member to move in one direction without moving said shielding member but driving said shielding member into its said first position, when said movable member moves in the opposite direction.

3. Safety device according to claim 2, characterized in that said one-way connection contains a friction clutch.

4. Device according to one or more of the preceding claims, characterized in that a driving means for the said shielding member is present, said driving means being capable to exert only forces below a predetermined limit.

FIG.1

FIG.2

# FIG.3

**0080752**

Application number

EP 82 20 1406

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | NL-A-7 406 376 (MARKERT)<br>--- | 1 | F 16 P 3/04 |
| A | US-A-2 201 244 (ROOT)<br>--- | 1 | |
| A | FR-A-2 429 929 (WALTERSCHEID)<br>--- | 1 | |
| A | CH-A- 410 533 (SCHWARZ)<br>----- | 1 | |

|  | TECHNICAL FIELDS SEARCHED (Int. Cl. 3) |
|---|---|
|  | F 16 P<br>B 65 B |

The present search report has been drawn up for all claims

| Place of search | Date of completion of the search | Examiner |
|---|---|---|
| THE HAGUE | 09-03-1983 | SEMBRITZKI K.G. |